(19) Europäisches Patentamt
European Patent Office
Office européen des brevets

(11) Publication number: **0 017 738 B1**

(12) **EUROPEAN PATENT SPECIFICATION**

(45) Date of publication of patent specification: **08.08.84**

(21) Application number: **80101017.4**

(22) Date of filing: **29.02.80**

(51) Int. Cl.³: **A 01 N 57/24**, A 01 N 57/16, A 01 N 57/14, A 01 N 57/12, A 01 N 53/00, A 01 N 47/22, A 01 N 47/18

(54) **An insecticidal and miticidal composition which contains a carbamate and an organic phosphorus compound, and a method of controlling insects and mites therewith.**

(30) Priority: **02.03.79 JP 23347/79**

(43) Date of publication of application: **29.10.80 Bulletin 80/22**

(45) Publication of the grant of the patent: **08.08.84 Bulletin 84/32**

(84) Designated Contracting States: **BE CH DE FR GB NL**

(56) References cited: **FR - A - 2 148 047**

(73) Proprietor: **IMPERIAL CHEMICAL INDUSTRIES PLC**
**Imperial Chemical House Millbank**
**London SW1P 3JF (GB)**

(72) Inventor: **Udagawa, Takatoshi**
**2070, Iijma-cho Totsuka-Ku**
**Yokohama Kanagawa-Ken (JP)**
Inventor: **Toyama, Teruhiko**
**9-13, Matsukazedai**
**Chigasaki Kanagawa-Ken (JP)**
Inventor: **Takasawa, Yoshio**
**927-551, Kamitsuchidana**
**Ayase Kanagawa-Ken (JP)**
Inventor: **Imai, Takamitsu**
**537, Nishikubo**
**Chigasaki Kanagawa-Ken (JP)**

(74) Representative: **Bishop, Nigel Douglas et al,**
**Imperial Chemical Industries PLC Legal**
**Department: Patents PO Box 6**
**Welwyn Garden City Herts, AL7 1HD (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 017 738 B1

**Description**

This invention relates to improved insecticidal and miticidal compositions and, more particularly, to such compositions containing 2-dimethylamino-5,6-dimethylpyrimidin-4-yl dimethyl carbamate and at least one compound selected from organic phosphorus compounds, methylcarbamate compounds, and pyrethroid compounds.

It has been proposed in FR—A—2 148 047 to combine 2-dimethylamino-5,6-dimethylpyrimidin-4-yl dimethyl carbamate with a member of a narrow class of phosphorothioates and dithioates of the formula:

$$\overset{\displaystyle X}{\overset{\|}{(CH_3O)_2P}}—X—CH_2Q$$

wherein X and Y represent oxygen or sulphur and Q represents a group of formula $—CH_2—S—C_2H_5$ or $—CONHCH_3$ and one of X and Y represents sulphur. Such combinations are said to be effective in combating aphid pests, but this is to be expected since the carbamate is a well known extremely effective aphicide. This reference does not suggest that combinations of the carbamate with other organo phosphorous compounds, or with other carbamates or pyrethroids would be synergistically effective in controlling insect and acarine pests not effectively controlled by the carbamate alone.

The term "organic phosphorus compounds" as used herein does not include those referred to in FR—A—2 148 047 but comprehends well-known organic phosphorus insecticides such as S-[1,2-bis-(ethoxycarbonyl)ethyl] dimethyl phosphoro thiolthioate (Malathion), dimethyl 4-nitro-*m*-tolyl phosphorothioate (MEP), S-[$\alpha$-ethoxycarbonyl)benzyl] dimethyl phosphorothiolothiate (PAP), dimethyl 4-methylthio-*m*-tolyl phosphorothioate (MPP), diethyl, 2,3-dihydro-3-oxo-2-phenyl-6-pyridazinyl phosphorothioate (Pyridaphenthion), diethyl 2-isopropyl-6-methyl-4-pyrimidyl phosphorothioate (Diazinon), O,S-dimethyl N-acetylphosphoroamidothioate (Acephate), dipropyl *p*-methylthiophenyl phosphate (Propaphos), 2-chloro-1-(2,4,5-trichlorophenyl)vinyl dimethyl phosphate (CVMP), 1-phenyl-1,2,4-triazol-3-yl O,O-diethyl thionophosphate (Triazophos), O,O-diethyl-O-(2-quinoxalyl) phosphorothioate (Quinalphos), *p*-cyanophenyl dimethyl phosphorothioate (CYAP), dimethyl S-[2-(1-methylcarbamoylethylthio)-ethyl/phosphorothioate (Bamidothion), *p*-cyanophenyl ethyl phenyl phosphorothioate (CYP), 2-chloro-1-(2,4-dichlorophenyl)vinyl diethyl phosphate (CVP), 2-methoxy-4H-1,3,2-benzodioxaphosphorin-2-sulfide (Salithion), 2,2-dichlorovinyl dimethyl phosphate (DDVP), S-*p*-chlorophenyl dimethyl phosphorothioate (DMCP), (DDVP), S-*p*-chlorophenyl dimethyl phosphorothioate (DMCP), dimethyl 2,2,2-trichloro-1-hydroxyethyl phosphonate (DEP), dimethyl 3,5,6-trichloro-2-pyridyl phosphorothionate (Chlorpyriphosmethyl), dimethyl S-phthalimidomethyl phosphorothiolothionate (PMP), ethyl *p*-nitrophenyl phosphonothionate (EPN), diethyl 3,5,6-trichloro-2-pyridyl phosphorothionate (Chlorpyriphos), diethyl 5-phenyl-3-isoxazolyl phosphorothionate (Isoxathion), S-(2-ethylthioethyl) diethyl phosphorothiolothionate (Ethylthiometon), S-(4,6-diamino-1,3,5-triazin-2-ylmethyl) dimethyl phosphorothiol-othionate (Menazon), diethylamino-6-methyl-4-pyrimidinyl diethyl phosphorothionate (Pyrimiphos ethyl), 2-diethylamino-6-methylpyrimidin-4-yl-dimethyl phosphorothioate (Pirimiphos methyl), and the like; and well-known organic phosphorus germicides such as S-benzyl diisopropyl phosphorothiolate (IBP), O-ethyl diphenyl phosphorodithiolate (EDDP), and the like.

The term "methylcarbamate compounds" as used herein comprehends well-known carbamate compounds such as *m*-tolyl methylcarbamate (MTMC), *o*-cumenylmethylcarbamate (MIPC), *o-sec*-butylphenyl methylcarbamate (BPMC), *o*-isopropoxyphenyl methylcarbamate (PHC), 3,4-xylyl methylcarbamate (MPMC),l 3,5-xylyl methylcarbamate (XMC), 1-naphthyl methylcarbamate (NAC), 3-tolyl N-*n*-propylcarbamate (MTMC—Z), and the like.

The term "pyrethroid compounds" as used herein comprehends well-known pyrethroid insecticides such as $\alpha$-cyano-3-phenoxybenzyl $\alpha$-isopropyl-*p*-chlorophenylacetate (Phenvalerate), 3-phenoxybenzyl 2,2-dimethyl-3-(2,2-dichlorovinyl)cyclopropane-1-carboxylate (Permethrin), $\alpha$-cyano-3-phenoxybenzyl 2,2-dimethyl-3-(2,2-dichlorovinyl) cyclopropane carboxylate (cypermethrin), ($\pm$)-3-allyl-2-methyl-4-oxo-2-cyclopentenyl ($\pm$)-*cis, trans*-chrysanthemumonocarboxylate (Allethrin), and the like.

In recent years, widespread use of insecticides and miticides has brought about the development of resistance in a variety of pests. More specifically, the development of resistance to pesticides has been recognised in many kinds of leafhoppers, (eg. *Nephotettix apicalis cincticeps*), mites and aphids. In addition, the development of resistance in hygienically noxious insects such as flies (eg. *Musca domestica vicina*) and osquitos has become a serious problem because it makes their control more and more difficult. Accordingly, there is a strong demand for insecticidal and miticidal agents which are effective against such resistant insects and mites.

It is an object of this invention to provide an insecticidal and miticidal composition which can be effectively control such insects and mites as are resistant to conventional insecticidal and miticidal agents.

In accordance with this invention, an insecticidal and miticidal composition comprises (a) 2-dimethylamino-5,6-dimethylpyrimidin-4-yl dimethylcarbamate (hereinafter referred to as Compound (A): (b) at least one compound selected from the group consisting of organic phosphorus compounds, methylcarbamate compounds, and pyrethroid compounds; and (c) an inert carrier; provided that where (b) is an organic phosphorus compound it is selected from S-[1,2-bis(ethoxycarbonyl)-ethyl]dimethyl phosphorothiolthioate, dimethyl 4-nitro-*m*-tolyl phosphorothioate, S-[$\alpha$-(ethoxycarbonyl)benzyl] dimethyl phosphorothiolothioate, dimethyl 4-methylthio-*m*-tolyl phosphorothioate, diethyl 2,3-dihydro-3-oxo-2-phenyl-6-pyridazinyl phosphorothioate, diethyl 2-isopropyl-6-methyl-4-pyrimidyl phosphorothioate, O,S-dimethyl N-acetylphosphoroamidothioate, dipropyl *p*-methylthiophenyl phosphate, 2-chloro-1-(2,4,5-trichlorophenyl)vinyl dimethyl phosphate, 1-phenyl-1,2,4-triazol-3-yl O,O-diethyl thionophosphate, O,O-diethyl-O-(2-quinoxalyl)phosphorothioate, *p*-cyanophenyl dimethyl phosphorothioate, dimethyl S-[1-dimethylcarbamoylethylthio)ethyl] phosphorothioate, *p*-cyanophenyl ethyl phenyl phosphorothioate, 2-chloro-1-(2,4-dichlorophenyl)vinyl diethyl phosphate, 2-methoxy-4H-1,3,2-benzodioxaphosphorin-2-sulfide, 2,2-dichlorovinyl dimethyl phosphate, S-*p*-chlorophenyl dimethyl phosphorothioate, dimethyl, 2,2,2-trichloro-1-hydroxyethyl phosphonate, dimethyl 3,5,6-trichloro-2-pyridyl phosphorothionate, dimethyl S-phthalimidomethyl phosphorothiolothionate, ethyl *p*-nitrophenyl phenyl phosphonothionate, diethyl 3,5,6-tichloro-2-pyridyl phosphorothioate, diethyl 5-phenyl-3-isoxazolyl phosphorothionate, S-(2-ethylthioethyl) diethyl phosphorothiolothionate, S-(4,6-diamino-1,3,5-triazin-2-ylmethyl) dimethyl phosphorothiolothionate, O-(2-diethylamino-6-methyl-pyrimidin-4-yl) O,O-dimethyl phosphorothioate, 2-diethylamino-6-methyl-4-pyrimidinyl diethyl phosphorothionate, S-benzyl diisopropyl phosphorothiolate and O-ethyl diphenyl phosphorodithiolate.

The present inventors have found that mixtures of Compound A and at least one organic phosphorus compound, methylcarbamate compound, or pyrethroid compound have a very potent synergistic effect in controlling various kinds of pest (such as leafhoppers and mites) which are resistant to conventional insecticidal and miticidal agents. This is quite surprising because Compound A, which has so far been known as an insecticide for aphids only, is chemically called a pyrimidine carbamate as distinguished from phenylcarbamates and the like and hence considered to be ineffective against pests other than aphids.

In the composition of this invention, Compound A is preferably present in an amount of from 10 to 90% by weight, more preferably from 30 to 70% by weight, and most preferably 50% by weight, based on the combined weight of all the active ingredients.

The composition of this invention may be prepared in the form of a dust, wettable powder, emulsion or granules by mixing Compound A and at least one organic phosphorus compound, methylcarbamate compound, or pyrethroid compound with various well-known solid or liquid carriers or by dissolving those active ingredients in suitable solvents. The combined amount of all the active ingredients present in this composition is preferably at least 1% by weight, and more preferably from 2 to 70% by weight, based on the total amount of the composition. More specifically, depending on the form of the composition, the preferred range of the combined amount of all active ingredients varies as follows:

| | |
|---|---|
| Dust | From 2 to 5% by weight |
| Wettable powder | From 40 to 70% by weight |
| Granules | From 3 to 6% by weight |
| Emulsion | From 20 to 50% by weight |

The composition of this invention is preferably applied to a paddy or upland field in such a way that the active ingredients are deposited in a combined amount of from 1 to 50 g, more preferably from 4 to 30 g, and most preferably from 10 to 16 g, per are of the field. For use in mechanized planting of young rice plants and the like, the composition of this invention is conveniently prepared in the form of granules, though it may be used in the form of an emulsion, wettable powder or dust. In such a case, the composition of this invention is preferably applied so that the active ingredients are deposited in a combined amount of from 1 to 20 g per are of the field.

Specific examples of the insects and mites which can be controlled by the composition of this invention are as follows:

Hemiptera
*Nephotettix apicalis cincticeps ukler*
*Sogatella furcifera* Horvath
*Nilaparvata lugens Stal*
*Laoderphax striatellus* Fallon
Thysanoptera
*Thrips oryzae* Williams
*Thrips tabaci* Lindeman

Anoplura

*Pediculus humanas* Linne

*Haemotopinus eurysternus* Nitzsh

Lepidoptera

*Chilo suppressalis* Walker

*Spodoptera litura* Fabricius

*Pieris rapae crucivora* Boisduval

*Plutella xylostella* Linne

Diptera

*Musca domestica vicina* Macquart

*Culex pipiens pallens* Coquillet

Coleoptera

*Epilachna sparsa orientalis* Dieke

*Callosobruchus chinensis* Linne

*Lema oryzae* Kuwayama

*Aulocophora femoralis* Motschulsky

Hymenoptera

*Arge pagana* Panzer

*Athalia japonensis* Rohwer

Orthoptera

*Locusta migratoria danica* Linne

*Oxya japonica* Willemse

*Phyllodromia germanica* Linne

*Periplaneta japonica* Karny

Acarina

Tetranychus urticae Koch

*Tetranychuus telarius* Linne

*Tetranychus kanzawai* Kishida

*Panonychus ulmi*

*Panonychus citri*

*Boophilus annulatus*

Thus, the compositions of this invention permit almost complete destruction of such insects and mites as are resistant to various conventional insecticidal and miticidal agents and hence very hard to control.

This invention will be more fully understood by reference to the following examples in which a number of compositions were prepared in accordance with the invention and tested for their insecticidal and miticidal activities. However, these examples are intended merely to illustrate the practicie of the invention and are not to be construed to limit the scope of the invention. In these examples, all parts are by weight and the designations of test compounds are as previously defined.

Example 1

A mixture of 2.0 parts of Pyridaphenthion, 2.0 parts of Compound A, and 96.0 parts of talc was ground to form a dust.

Example 2

A mixture of 30.0 parts of Acephate, 20.0 parts of Compound A, Gosenol (a product of Nippon Gosei Kagaku Kogyo Co., Japan), and 48 parts of clay was ground to form a wettable powder.

Example 3

A mixture of 2.0 parts of Pyridaphenthion, 1.5 parts of MTMC, 1.5 parts of Compound A, and 95 parts of clay was ground to form a dust.

Example 4

An organic solvent solution of 30.0 parts of Pyridaphenthion, 20.0 parts of Compound A, and 5 parts of surface-active agents was dispersed in water to form an emulsion.

Example 5

A mixture of 3 parts of Pyridaphenthion, 2 parts of Compound A, and 95 parts of bentonite was ground to powder. After the addition of an appropriate amount of water, the powder was granulated and then adjusted to an optimum grain size.

Example 6

A mixture of 0.5 part of Phenvalerate, 1.5 parts of Compound A, and 98 parts of clay was ground to form a dust.

Example 7

A mixture of 2.0 parts of Pyridaphenthion, 2.0 parts of IBP, 2.0 parts of Compound A, and 94 parts of clay was ground to form a dust.

Example 8

Rice plants were grown in pots until 3 or 4 leaves were put forth and then sprayed with a solution containing each test material at a concentration of 50, 100 or 200 ppm. After air-drying, the rice plants grown in each pot were covered with a cylinder made of wire gauze. Then, 30 organophosphate- and methylcarbamate-resistant male adult leafhoppers (of the Kakagawara strain) which were being successively cultivated in a laboratory were put onto the rice plants of each pot. The pot was allowed to stand for 12 hours in a room kept at 25°C and then examined for the mortality of the insects. The results thus obtained are shown in Table I.

TABLE 1

| | | Mortality (%) | | |
|---|---|---|---|---|
| | | Concentration of Active Ingredient | | |
| | Test Material | 50 ppm | 100 ppm | 200 ppm |
| Single Compound | Pyridaphenthion | 0 | 0 | 0 |
| | Acephate | 0 | 6.7 | 10.0 |
| | Propaphos | 23.3 | 56.7 | 73.3 |
| | Phenvalerate | 56.7 | 70.0 | 90.0 |
| | IBP | 0 | 0 | 0 |
| | MTMC | 0 | 0 | 0 |
| | Compound A | 0 | 0 | 0 |
| Composition of this invention (consisting of a 1 :1 mixture of two ingredients) | Pyridaphenthion + Compound A | 36.7 | 96.7 | 83.3 |
| | Acephate + Compound A | 33.3 | 46.7 | 73.3 |
| | Propaphos + Compound A | 70.0 | 96.7 | 100.0 |
| Composition of the invention (consisting of a 1 : 1 : 1 mixture of the three ingredients) | Phenvalerate + Compound A | 66.7 | 83.3 | 100.0 |
| | IBP + Compound A | 6.7 | 20.0 | 50.0 |
| | MTMC + Compound A | 6.7 | 23.3 | 33.3 |
| Composition of this invention (consisting of a 1 : 1 mixture of three ingredients) | Pyridaphenthion + MTMC + Compound A | 40.0 | 73.3 | 100.0 |
| | Pyridaphenthion + IBP + Compound A | 13.3 | 26.7 | 60.0 |
| Prior art consisting of a 1 :1 mixture of two ingredients | Pyridaphenthion + MTMC | 0 | 6.7 | 23.3 |
| | Acephate + MTMC | 6.7 | 6.7 | 40.0 |

Example 9

Each test material was dissolved in acetone to form a solution having a desired concentration. Leafhoppers of the Nakagawara strain were lightly anesthetized with carbon dioxide and, using a topical applicator, the above solution was topically applied to the thorax of each insect in a dose of 0.32 μl. The treated insects were immediately put onto young rice plants (with 2 or 3 leaves) previously grown in a pot and covered with a cylinder made of wire gauze. The pot was allowed to stand for 24 hours in a room kept at 25°C and then examined for the mortality of the insects.

The mixtures tested in this Example were prepared in a weight ratio of 1:1 and their LD—50 values were expressed in terms of the combined amount of two ingredients. The coefficient of synergism was calculated according to the method of Sun and Johnson. The results thus obtained are shown in Table 2.

TABLE 2

| Test Material | LD–50 (μ g/g) | Coefficient of Synergism[2] |
|---|---|---|
| Pyridaphenthion | 225.2 | |
| Acephate | 30.3 | |
| Propaphos | 18.4 | |
| Phenvalerate | 0.32 | |
| IBP | 500[1)] | |
| MTMC | 123.1 | |
| Compound A | 500[1)] | |
| Pyridaphenthion + Compound A | 12.8 | 2411 |
| Acephate + Compound A | 17.6 | 325 |
| Propaphos + Compound A | 10.7 | 332 |
| Phenvalerate + Compound A | 0.51 | 125 |
| IBP + Compound A | 37.5 | 1333 |
| MTMC + Compound A | 79.1 | 250 |

1. In calculating the coefficient of synergism, the LD–50 values of IBP and Compound A were assumed to be 500 μg/g.

2. If the coefficient of synergism is greater than 100, the combination is judged to have a synergistic effect.

Example 10

Two compositions of this invention were tested for their miticidal activity against resistant mites. A piece of absorbent cotton was placed in a petri dish of 5 cm diameter and soaked with water. Leaf discs of a kidney bean plant were stamped out by means of a cork borer and placed on the absorbent cotton. Each disc was inoculated with 10 mites and then sprayed uniformly with 1.0 ml of a solution containing each test material. The petri dish was allowed to stand for 24 hours in a room kept at 25°C and then examined for the mortality of the mites by means of a stereoscopic microscope. The results thus obtained are shown in Table 3. The mixtures tested in this Example were prepared in a weight ratio of 1:1 and their concentrations were expressed in terms of the combined amount of two ingredients.

TABLE 3

| Test Material | Mortality (%) Concentration of Active Ingredient(s) 200 ppm | 400 ppm |
|---|---|---|
| Pyridaphenthion | 0.0 | 30.0 |
| Compound A | 0.0 | 0.0 |
| Pyridaphenthion + Compound A | 50.0 | 100.0 |

Example 11

An emulsion of each test material was diluted with water so as to give an active ingredient concentration of 5 ppm. A polyethylene cup of 5 cm diameter with 100 ml of the diluted emulsion, in which young rice plants were hydroponically grown to that the active ingredients might be absorbed through their roots. The rice plants were covered with a cylinder made of 100-mesh wire gauze, and 20 resistant male adult leafhoppers (of the Nakagawara strain) were put onto the rice plants. After 24 hours, the number of living and dead insects were counted to calculate the mortality.

In order to examine the durability of the insecticidal activity of each test material, the same procedure was repeated at predetermined intervals of time. The results thus obtained are shown in Table 4. The mixtures tested in this Example were prepared in a weight ratio of 1:1.

TABLE 4

| Test Material | Concentration of active ingredient (ppm) | Mortality (%) Number of days elapsed after treatment 0 | 1 | 3 | 7 | 14 |
|---|---|---|---|---|---|---|
| Propaphos | 5 | 80 | 90 | 70 | 80 | 60 |
| Pyridaphenthion | 5 | 20 | 40 | 30 | 50 | 20 |
| Triazaphos | 5 | 0 | 20 | 10 | 10 | 0 |
| Compound A | 5 | 5 | 10 | 0 | 0 | 5 |
| Propaphos + Compound A | 2.5 + 2.5 | 100 | 100 | 100 | 100 | 100 |
| Pyridaphenthion + Compound A | 2.5 + 2.5 | 90 | 100 | 100 | 90 | 90 |
| Triazophos + Compound A | 2.5 + 2.5 | 80 | 90 | 100 | 95 | 80 |

Example 12

According to the conventional procedure, young rice plants (of the Nihonbare strain) were grown in nursery boxes (60 cm x 30 cm x 3 cm). Twenty-one days after seeding (ie. on the day of transplantation), 50 g of granules containing each test material were applied to one of the nursery boxes and an adequate amount of water was sprinkled by means of a watering can. Three hours after the application of granules a group of 5 rice plants were taken from the nursery box (without removing the soil from their roots) and transplanted to a pot (heavily irrigated so as to be in a paddy-like state) having an area of 1/5000 are. The pot was covered with a cylinder made of wire gauze, and 20 resistant male adult leafhoppers (of the Nakagaware strain) were put onto the rice plants. After 24 hours, the number of living and dead insects were counted to calculate the mortality. The durability of the insecticidal activity of each test material was examined in the same manner as in Example 11.

The results thus obtained are shown in Table 5. The mixtures tested in this Example were prepared in a weight ratio of 1:1.

TABLE 5

| Test Material (concentration in % by weight) | Amount of granules appl. to each nursery box (g) | Mortality (%) Number of days elapsed after transplantation 0 | 5 | 10 | 15 | 20 |
|---|---|---|---|---|---|---|
| Pyridaphenthion (5%) | 50 | 60 | 70 | 55 | 55 | 40 |
| Ethylthiometon (5%) | 50 | 80 | 90 | 90 | 70 | 60 |
| Propaphos (5%) | 50 | 80 | 90 | 100 | 90 | 70 |
| Compound A (5%) | 50 | 10 | 5 | 10 | 15 | 5 |
| Pyridaphenthion + Compound A (2.5% + 2.5%) | 50 | 95 | 100 | 100 | 100 | 95 |
| Ethylthiometon + Compound A (2.5% + 2.5%) | 50 | 100 | 100 | 100 | 95 | 90 |
| Propaphos + Compound A (2.5% + 2.5%) | 150 | 100 | 100 | 100 | 100 | 95 |

(Toxicological Test)

Example 13

According to the conventional procedure, young rice plants (of the Nihonbare strain) were grown in nursery boxes (60 cm x 30 cm x 3 cm). Twenty-one days after seeding (ie. on the day of transplantation), 50 g of granules containing each test material were applied to one of the nursery boxes and an adequate amount of water was sprinkled by means of a watering can. Three hours after the application of granules, a group of 5 rice plants were taken from the nursery box (without removing the soil from their roots) and transplanted to a pot (heavily irrigated so as to be in a paddy-like state) having an area of 1/5000 are. Twenty days after transplantation, the rice plants were examined for the presence of detrimental effects. The results thus obtained are shown in Table 6. The mixtures tested in this Example were prepared in a weight ratio of 1:1.

TABLE 6

| Test Material (concentration in % by weight) | Amount of granules applied to each nursery box (g) | Observed Effect |
|---|---|---|
| Pyridaphenthion (5%) | 50 | No detrimental effect |
| Propaphos (5%) | 50 | Appearance of brown spots in leaf tips, followed by recovery |
| Compound A (5%) | 50 | No detrimental effects |
| BPMC[1] (5%) | 50 | Withering |
| Pyridaphenthion + Compound A (2.5% + 2.5%) | 50 | No detrimental effects |
| Propaphos + Compound A (2.5% + 2.5%) | 50 | No detrimental effects |
| Pyridaphenthion + BPMC (2.5% + 2.5%) | 50 | Withering |
| Propaphos + BPMC (2.5% + 2.5%) | 50 | Withering |
| Pyridaphenthion + MTMC (2.5% + 2.5%) | 50 | Withering |
| Propaphos + MTMC (2.5% + 2.5%) | 50 | Withering |

1. *o-sec*-Butylphenyl methylcarbamate
2. *m*-Tolyl methylcarbamate

## Claims

1. An insecticidal and miticidal composition comprising (a) 2-dimethylamino-5,6-dimethylpyrimidin-4-yl dimethylcarbamate, (b) at least one compound selected from the group consisting of organic phosphorus insecticide or germicide compounds, methylcarbamate compounds, and pyrethroid compounds; and (c) an inert carrier; provided that where (b) is an organic phosphorus compound it is selected from S-[1,2-bis-(ethoxycarbonyl)ethyl]dimethyl phosphorothiolthionate, dimethyl 4-nitro-*m*-tolyl phosphorothioate, S-[$\alpha$-(ethoxycarbonyl)benzyl] dimethyl phosphorothiolothionate, dimethyl 4-methylthio-*m*-tolyl phosphorothioate, diethyl 2,3-dihydro-3-oxo-2-phenyl-6-pyridazinyl phosphorothioate, diethyl 2-isopropyl-6-methyl-4-pyrimidyl phosphorothioate, O,S-dimethyl N-acetylphosphoroamidothioate, dipropyl *p*-methylthiophenyl phosphate, 2-chloro-1-(2,4,5-trichlorophenyl)vinyl dimethyl phosphate, 1-phenyl-1,2,4-triazol-3-yl O,O-diethyl thionophosphate, O,O-diethyl-O-(2-quinoxalyl)-phosphorothioate, *p*-cyanophenyl dimethyl phosphorothioate, dimethyl S-[1-dimethylcarbamoylethylthio)ethyl] phosphorothioate, *p*-cyanophenyl ethyl phenyl phosphorothioate, 2-chloro-1-(2,4-dichlorophenyl)vinyl diethyl phosphate, 2-methoxy-4H-1,3,2-benzodioxaphosphorin-2-sulfide, 2,2-dichlorovinyl dimethyl phosphate, S-*p*-chlorophenyl dimethyl phosphorothioate, dimethyl, 2,2,2-trichloro-1-hydroxyethyl phosphonate, dimethyl 3,5,6-trichloro-2-pyridyl phosphorothionate, dimethyl S-phthalimidomethyl phosphorothiolothionate, ethyl *p*-nitrophenyl phenyl phosphonothionate, diethyl 3,5,6-trichloro-2-pyridyl phosphorothioate, diethyl 5-phenyl-3-isoxazolyl phosphorothionate, S-(2-ethylthioethyl) diethyl phosphorothiolothionate, S-(4,6-diamino-1,3,5-triazin-2-ylmethyl) dimethyl phosphorothiolothionate, O-(2-diethylamino-6-methylpyrimidin-4-yl) O,O-dimethyl phosphorothioate, 2-diethylamino-6-methyl-4-pyrimidinyl diethyl phosphorothionate, S-benzyl diisopropyl phosphorothiolate and O-ethyl diphenyl phosphorodithiolate.

2. The composition according to claim 1 wherein the active ingredient (b) is diethyl 2,3-dihydro-3-oxo-2-phenyl-6-pyridazinyl phosphorothioate, O,S-dimethyl N-acetyl-phosphoroamidothioate, dipropyl *p*-methylthiophenyl phosphate, 1-phenyl-1,2,4-triazol-3-yl O,O-diethyl thionophosphate, diethyl S-(2-ethylthioethyl) phosphorothiolthioate, S-benzyl diisopropyl phosphorothiolate or 2-diethylamino-6-methylpyrimidin-4-yl dimethyl phosphorothioate.

3. The composition according to claim 1 wherein the active ingredient (b) is *m*-tolyl methylcarbamate.

4. The composition according to claim 1 wherein the active ingredient (b) is $\alpha$-cyano-3-phenoxybenzyl $\alpha$-isopropyl-*p*-chlorophenylacetate, or $\alpha$-cyano-3-phenoxybenzyl 2,2-dimethyl-3-(2,2-dichlorovinyl) cyclopropane carboxylate.

5. The composition according to claim 1 wherein the active ingredient (b) is a combination of diethyl 2,3-dihydro-3-oxo-2-phenyl-6-pyridazinyl phosphorothioate and *m*-tolyl methylcarbamate of S-benzyl diisopropyl phosphorothiolate.

6. The composition according to claim 1 wherein the active ingredient (a) is present in an amount of from 10 to 90% by weight based on the combined amount of the active ingredients (a) and (b).

7. The compositions according to claim 6 wherein the active ingredient (a) is present in an amount of from 30 to 70% by weight based on the combined amount of the active ingredients (a) and (b).

8. The composition according to claim 1 wherein the combined amount of the active ingredients (a) and (b) is at least 1% by weight based on the total amount of the composition.

9. The composition according to claim 8 wherein the combined amount of the active ingredients (a) and (b) is from 2 to 70% by weight based on the total amount of the composition.

10. A method of controlling insects or mites which comprises applying the composition according to claim 1 to the locus of the insects or mites.

**Patentansprüche**

1. Insecticide und acaricide Zusammensetzung, welche (a) 2-Dimethylamino-5,6-dimethylpyrimidin-4-yl-dimethylcarbamat, (b) mindestens eine Verbindung, die aus insecticiden oder germiciden organischen Phosphorverbindungen, Methylcarbamatverbindungen und Pyrethroidverbindungen ausgewählt ist, und (c) einen inerten Träger enthält; mit der Maßgabe, das, wenn (b) eine organische Phosphorverbindung ist, diese Verbindung ausgewählt ist aus S-[1,2-Bis-(äthoxycarbonyl)äthyl]-dimethyl-phosphorothiolothionat, Dimethyl-4-nitro-m-tolyl-phosphorothioat, s-[$\alpha$-(Äthoxycarbonyl)-benzyl]-dimethyl-phosphorothiolothionat, Dimethyl-4-methylthio-m-tolyl-phosphorothioat, Diäthyl-2,3-dihydro-3-oxo-2-phenyl-6-pyridazinylphosphorothioat, Diäthyl-2-isopropyl-6-methyl-4-pyrimidyl-phosphorothioat, O,S-Dimethyl-N-acetylphosphoroamidothioat, Dipropyl-p-methylthiophenylphosphat, 2-Chloro-1-(2,4,5-trichlorophenyl)vinyldimethyl-phosphat, 1-Phenyl-1,2,4-triazol-3-yl-O,O-diäthyl-thionophosphat, O,O-Diäthyl-O-(2-chinoxalyl)-phosphorothioat, p-Cyanophenyl-dimethyl-phosphorothioat, Dimethyl-S-[1-methylcarbamoyläthylthio)äthyl]-phosphorothioat, p-Cyanophenyl-äthyl-phenyl-phosphorothioat, 2-Chloro-1-(2,4-dichlorophenyl)vinyldiäthyl-phosphat, 2-Methoxy-4H-1,3,2-benzodioxaphosphorin-2-sulfid, 2,2-Dichlorovinyldimethyl-phosphat, S-p-Chlorophenyldimethyl-phosphorothioat, Dimethyl-2,2,2-trichloro-1-hydroxyäthyl-phosphonat, Dimethyl-3,5,6-trichloro-2-pyridyl-phosphorothionat, Dimethyl-S-phthalimidomethyl-phosphorothiolothionat, Äthyl-p-nitrophenyl-phenyl-phosphonothionat, Dioäthyl-3,5,6-trichloro-2-pyridyl-phosphorothioat, Diäthyl-5-phenyl-3-isoxazolyl-phosphorothionat, S-(2-Äthylthioäthyl)-diäthyl-phosphorothiolothionat, S-(4,6-Diamino-1,3,5-triazin-2-ylmethyl)-dimethyl-phosphorothiolothionat, O-(2-Diäthylamino-6-methyl-pyrimidin - 4 - yl) - O,O - dimethylphosphorothioat, 2-Diäthylamino-6-methyl-4-pyrimidinyl-diäthyl-phosphorothionat, S-Benzyl-diisopropyl-phosphorothiolat und O-Äthyl-diphenyl-phosphorodithiolat.

2. Zusammensetzung nach Anspruch 1, bei welcher der aktive Bestandteil (b) aus Diäthyl-2,3-dihydro-3-oxo-2-phenyl-6-pyridazinyl-phosphorothioat, O,S-Dimethyl-N-acetylphosphoroamidothioat, Dipropyl - p - methylthiophenyl - phosphat, 1-Phenyl-1,2,4-triazol-3-yl-O,O-diäthyl-thionophosphat, Diäthyl-S-(2-äthylthioäthyl)-phosphorothiolthioat, S-Benzyldiisopropyl-phosphorothiolat oder 2-Diäthylamino-6-methylpyrimidin-4-yl-dimethyl-phosphorothioat besteht.

3. Zusammensetzung nach Anspruch 1, bei welcher der aktive Bestandteil (b) aus m-Tolyl-methylcarbamat besteht.

4. Zusammensetzung nach Anspruch 1, bei welcher der aktive Bestandteil (b) aus $\alpha$-Cyano-3-phenoxybenzyl-$\alpha$-isopropyl-p-chlorophenylacetat oder $\alpha$-Cyano-3-phenoxybenzyl-2,2-dimethyl-3-(2,2-dichlorovinyl)cyclopropan-carboxylat besteht.

5. Zusammensetzung nach Anspruch 1, bei welcher der aktive Bestandteil (b) eine Kombination

aus Diäthyl-2,3-dihydro-3-oxo-2-phenyl-6-pyridazinyl-phosphorothioat und m-Tolyl-methylcarbamat oder S-Benzyl-diisopropyl-phosphorothiolat ist.

6. Zusammensetzung nach Anspruch 1, bei welcher der aktive Bestandteil (a) in einer Menge von 10 bis 90 Gew.-%, bezogen auf die kombinierte Menge aus den aktiven Bestandteilen (a) und (b), vorliegt.

7. Zusammensetzung nach Anspruch 6, bei welcher der aktive Bestandteil (a) in einer Menge von 30 bis 70 Gew.-%, bezogen auf die kombinierte Menge der aktiven Bestandteile (a) und (b), orliegt.

8. Zusammensetzung nach Anspruch 1, bei welcher die kombinierte Menge der aktiven Bestandteile (a) und (b) mindestens 1 Gew.-%, bezogen auf die Gesamtmenge der Zusammensetzung, beträgt.

9. Zusammensetzung nach Anspruch 8, bei der die kombinierte Menge der aktiven Bestandteile (a) und (b) 2 bis 70 Gew.-%, bezogen auf die Gesamtmenge der Zusammensetzung, beträgt.

10. Verfahren zur Bekämpfung von Insekten oder Milben, bei welchem die Zusammensetzung nach Anspruch 1 auf den Aufenthaltsort der Insekten oder Milben aufgebracht wird.

## Revendications

1. Composition insecticide et acaricide, comprenant (a) du diméthylcarbamate de 2-diméthylamino-5,6-diméthylpyrimidine-4-yle, (b) au moins un composé choisi dans le groupe comprenant des composés insecticides ou germicides organophosphorés, des méthylcarbamates et des composés du type pyréthrine; et (c) un support inerte; sous réserve que, lorsque (b) est un composé organophosphoré, il soit choisi entre le phosphorothiolothionate de S-[1,2-bis-(éthoxycarbonyl)éthyl]-diméthyle, le 4-nitro-*m*-tolylphosphorothioate de diméthyle, le phosphorothiolothionate de S-[$\alpha$-(éthoxycarbonyl)benzyl]diméthyle, le 4-méthylthio-*m*-tolylphosphorothioate de diméthyle, le 2,3-dihydro-3-oxo-2-phényl-6-pyridazinylphosphorothioate de diéthyle, le 2-isopropyl-6-méthyl-4-pyrimidylphosphorothioate de diéthyle, le N-acétylphosphoramidothioate de O,S-diméthyle, le *p*-méthylthiophénylphosphate de dipropyl, le phosphate de 2-chloro-1-(2,4,5-trichlorophényl)vinyle et de diméthyle, le thionophosphate de 1-phényl-1,2,4-triazole-3-yle et de O,O-diéthyle, le phosphorothioate de O,O-diéthyle et de O-(2-quinoxalyle), le phosphorothioate de *p*-cyanophényle et de diméthyle, le phosphorothioate de diméthyle et de S-[1-méthylcarbamoyléthylthio)éthyle], le phosphorothioate de *p*-cyanophényle, d'éthyle et de phényle, le phosphate de 2-chloro-1-(2,4-dichlorophényl)vinyl et de diéthyle, le 2-méthoxy-4H-1,3,2-benzodioxaphosphorine-2-sulfure, le phosphate de 2,2-dichlorovinyle et de diméthyle, le phosphorothioate de S-*p*-chlorophényle et de diméthyle, le phosphonate de diméthyle et de 2,2,2-trichloro-1-hydroxyéthyle, le phosphorothionate de diméthyle et de 3,5,6-trichloro-2-pyridyle, le phosphorothiolothionate de diméthyle et de S-phtalimidométhyle, le phosphonothionate d'éthyle, de *p*-nitrophényle et de phényle, le phosphorothioate de diéthyle et de 3,5,6-trichloro-2-pyridyle, le phosphorothionate de diéthyle et de 5-phényl-3-isoxazolyle, le phosphorothiolothionate de S-(2-éthylthioéthyle) et de diéthyle, le phosphorothiolothionate de S-(4,6-diamino-1,3,5-triazine-2-ylméthyle) et de diméthyle, le phosphorothioate de O-(2-diéthylamino-6-méthylpyrimidine-4-yle) et de O,O-diméthyle, le phosphoro-thionate de 2-diéthylamino-6-méthyl-4-pyrimidinyle et de diéthyle, le phosphorothiolate de S-benzyle et de diisopropyle et le phosphorodithiolate de O-éthyle et de diphényle.

2. Composition suivant la revendication 1, dans laquelle l'ingrédient actif (b) est le phosphorothioate de diéthyle et de 2,3-dihydro-3-oxo-2-phényl-6-pyridazinyle, le N-acétylphosphoramidothioate de O,S-diméthyle, le phosphate de dipropyle et de *p*-méthylthiophényle, le thionophosphate de 1-phényl-1,2,4-triazole-3-yle et de O,O-diéthyle, le phosphorothiolothioate de diéthyle et de S-(2-éthylthioéthyle), le phosphorothiolate de S-benzyle et de diisopropyle ou le phosphorothioate de 2-diéthylamino-6-méthylpyridine-4-yle et de diméthyle.

3. Composition suivant la revendication 1, dans laquelle l'ingrédient actif (b) est le méthylcarbamate de *m*-tolyle.

4. Composition suivant la revendication 1, dans laquelle l'ingrédient actif (b) est l'$\alpha$-isopropyl-*p*-chlorophénylacétate d'$\alpha$-cyano-3-phénoxybenzyle ou le 2,2-diméthyl-3-(2,2-dichlorovinyl)cyclopropanecarboxylate d'$\alpha$-cyano-3-phénoxybenzyle.

5. Composition suivant la revendication 1, dans laquelle l'ingrédient actif (b) est une association formée entre le phosphorothioate de diéthyle et de 2,3-dihydro-3-oxo-2-phényl-6-pyridazinyle et le méthylcarbamate de *m*-tolyle ou le phosphorothiolate de S-benzyle et de diisopropyle.

6. Composition suivant la revendication 1, dans laquelle l'ingrédient actif (a) est présent en une quantité de 10 à 90% en poids sur la base du poids total des ingrédients actifs (a) et (b).

7. Compositions suivant la revendication 6, dans lesquelles l'ingrédient actif (a) est présent en une quantité de 30 à 70% en poids sur la base de la quantité totale des ingrédients actifs (a) et (b).

8. Composition suivant la revendication 1, dans laquelle la quantité totale des ingrédients actifs (a) et (b) est d'au moins 1% en poids sur la base de la quantité totale de la composition.

9. Composition suivant la revendication 8, dans laquelle la quantité totale des ingrédients actifs (a) et (b) va de 2 à 70% en poids sur la base de la quantité totale de la composition.

10. Procédé pour combattre des insectes ou des acariens, qui consiste à appliquer la composition suivant la revendication 1 à l'habitat des insectes ou des acariens.